(19) Europäisches Patentamt
European Patent Office
Office européen des brevets

(11) **EP 3 572 146 A1**

(12) **EUROPEAN PATENT APPLICATION**

(43) Date of publication:
**27.11.2019 Bulletin 2019/48**

(51) Int Cl.:
***B01J 8/02*** (2006.01)

(21) Application number: **18382362.4**

(22) Date of filing: **25.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Consejo Superior De Investigaciones Científicas**
**28006 Madrid (ES)**

(72) Inventor: **ABANADES GARCÍA, Juan Carlos**
**33011 Oviedo (Asturias) (ES)**

(74) Representative: **Pons**
**Glorieta Ruben Dario 4**
**28010 Madrid (ES)**

(54) **REACTOR FOR HEATING A GAS AND USES THEREOF**

(57)    This invention discloses a reactor and methods for heating of a gas as it reacts with a solid. The reactor contains gas conducts that are empty of solids and that cross through a region packed with solids. The wall of the gas conducts has orifices to make it permeable but not selective to gases, while effectively separating the solids from the gas. In the reactor, the heat source to heat up the gas is generated by the exothermic reaction of the solids with one active component of the gas. The region packed with the reacting solids is at temperatures ranging from 500ºC to 1500ºC, to promote the heat transfer towards the gas and the high reactivity of the solids with the active components of the gas, that is forced to diffuse from the conduct through the orifices of the conduct wall.

FIG. 1

**Description**

**FIELD OF THE INVENTION**

This invention discloses a reactor and methods for heating of a gas as it reacts with a solid. The reactor contains gas conducts that are empty of solids and that cross through a region packed with solids. The wall of the gas conducts can withstand high temperatures and has orifices to make it permeable but not selective to gases, while effectively separating the solids from the gas. In the reactor, the heat source to heat up the gas is generated by the exothermic reaction of the solids with one active component of the gas. The region packed with the reacting solids is at high temperature (typically higher than 500ºC and lower than 1500ºC) as to simultaneously promote the heat transfer towards the gas and the high reactivity of the solids with the active components of the gas, that is forced to diffuse from the gas conduct through the orifices of the gas conduct wall. This allows the heat generated by the reaction of the gas with the solids to be more evenly distributed through the reactor. The reacting solid can be a carbonaceous fuel, a metal, a sulfide or a metal partially oxidized, that has high affinity to exothermically react with oxygen. Also, the solid can be calcium oxide, which has high affinity to exothermically react with carbon dioxide or water vapor. Additional solids not participating in the reaction may be present in the reactor to enhance the effective heat conductivity of the region packed with solids.

Methods for using this device in a number of intermittent power generation systems are disclosed, involving the periodic charge of the device with a new batch of active solids or the periodic chemical reactivation of the solids inside the device, operating in a cyclic manner.

**DESCRIPTION OF THE PRIOR ART**

There are a wide range of applications for high temperature heaters of gases. In particular, high temperature gas heaters or combustion chambers are needed in constant-pressure heat engines such as Brayton cycles that are highly efficient systems to transform thermal energy or chemical energy into mechanical work. For example, modern Natural Gas Combined Cycle power plants are approaching 60% net energy efficiencies.

Gas turbine devices are available at scales from several hundreds of MW to small applications in the transport and domestic sectors. These devices are best suited to operate with a compressed and heated flow of a working fluid free of solids, such as natural gas or a liquid fuel combustion flue gas. When burning solid fuels to heat up a compressed flow of air, many problems appear in the system related to the need to protect the gas turbine components from the solid particles entrained in the flue gas. Furthermore, the combustion of solid fuels at high pressure is an extremely intense exothermic reaction that can lead to strong temperature profiles and hot spots (that can cause ash softening or melting, fouling etc) in all types of direct gas-solid contact devices. Pressurised Fluidised Bed Combustors (PFBC), were designed to overcome some of these limitations. However, they have not succeeded commercially, because of their high cost when including reliable clean up equipment to remove solids in the heated flue gas stream.

Externally Fired Gas Turbines include gas heaters that avoid the direct contact of the combustion gases with turbine blades and can in theory be used in solid fuel combustion applications. They offer well known theoretical advantages when designing the externally fired heaters as part of Brayton cycles using air, helium, $CO_2$ or supercritical $CO_2$ as a working fluid (K.A. Al-attab, Z.A.Zainal, "Externally fired gas turbine technology: A review", Applied Energy 138, 2015, 474-487). However, these processes need to overcome important challenges to be economically competitive. For example, when the working fluid is air, such externally fired heater device requires a relatively large heat transfer area, due to the relatively modest heat transfer coefficients of air flowing through pipes. Also, the gas heater is expected to operate at much higher pressure than the heat source. This leads to large, thicker and more costly heat transfer walls. Therefore, there is a need for improved gas heating reactors using the energy released by the combustion of solid fuels in a manner that overcomes the previous limitations.

Of particular interest for this invention are some fuels characterised for their extremely high carbon content and low ash and volatile content (i.e. pet coke or carbon rich char resulting from biomass thermal processing).

Another type of processes that could benefit from better reactors for heating a gas at very high temperatures and high pressures using the energy from exothermic gas-solid reactions, are the "Chemical Looping Combustion" processes, CLC. The main current interest in developing CLC systems is for power generation processes with $CO_2$ capture, where a fuel is burnt with air but it is in no direct contact with air. This is achieved by oxidising a solid material (usually called "oxygen carrier") in direct contact with air (in a so called "air reactor") to produce a $N_2$ rich gas stream. Then, the oxidized form of the oxygen carrier is reduced by putting it in contact with the fuel (in the "fuel reactor") to generate a gas stream rich in $CO_2$ and $H_2O_{(v)}$. CLC processes rely on oxygen carriers such as metals, metal oxides in reduced form, sulphides etc. that are known to have very high enthalpy of oxidation and high affinity to oxygen at high temperatures. As an example, US5447024 discloses one of such chemical looping combustion methods using a generic metal M and its generic oxide MO. The gas fuel reduces porous particles of MO to M in the fuel reactor and air oxidizes M to MO in an air reactor, releasing large quantities of heat. A power generation system is designed that integrates these high pressure and high temperature reactors, by expanding the oxygen depleted air coming out from the air reactor into a gas turbine. However, this method is silent about the solutions required to protect the turbine blades from the solids that may escape from the air reactor (a problem known in PFBC applications noted above). CLC schemes remain at research scale trying to overcome this and other challenges. A wide variety of processes, reactors and materials have been conceived and tested at pilot scale, as reviewed by Adanez et al. ("Progress in Chemical-Looping Combustion and Reforming technologies" Progress in Energy and Combustion, 38, 215-282, 2012). Many solid M/MO redox systems of transition metals (Fe, Ni, Cu, Mn, Co) or their reduced oxides have been tested. Other redox equilibrium with sulphides (in particular $CaS/CaSO_4$, etc) have also been proposed as oxygen carriers for a range of chemical looping applications (US8110012B2).

Several other types of reactors options are being considered for CLC systems. The use of fluidized beds at atmospheric pressure is preferable to burn solid fuels, although these systems have efficiencies characteristic of Rankine cycles, that are typically lower than those involving high pressure Brayton cycles. The use of packed bed reactors for high pressure CLC systems, in an attempt to access the higher energy efficiencies characteristic of Brayton cycles has also been proposed (S. Noorman, et al.;" Packed Bed Reactor Technology for Chemical-Looping Combustion" Ind. Eng. Chem. Res. 2007, 46, 4212-4220). However, this is only applicable to gas fuels and it is not free of practical challenges: highly exothermic and fast oxidation reaction of solids in the air reactor at high pressure take place in very narrow reaction fronts, that move location as the reaction of the solids progresses. This means that the indirect heat transfer towards external fluids is not efficient from these narrow reaction fronts, because the heat transfer area is small, as this is limited to the narrow dimensions of the reaction front. In addition, due to the inherent heat transfer limitations of packed beds of solids, hot spots can appear in these oxidation regions, compromising the integrity and activity of the M/MO solid material. Proposed solutions to tackle these problems, by moderating the maximum temperatures in oxidation reaction fronts by diluting the active solid or by diluting the gas with a cooled $N_2$ recycle (as in US2012/0230897A1) translate into larger reactor volumes and/or larger pressure drops in the reactor and/or complex multi-reactor arrangements. Therefore, it can be concluded from the state of the art that there is no commonly accepted technical solution for the air reactors of CLC processes when these are required to operate at high pressures and temperatures, as needed to achieve high energy conversion efficiencies.

It is worth noting from the previous review of the state of the art that the high reactivity of the solids reacting with oxygen at high temperatures and pressures (with time scales for the full conversion of the solids in the order of seconds to minutes) and the high enthalpy of oxidation reactions per mol of $O_2$ ($\Delta H_r$ from -300 kJ/mol$O_2$ to -600 kJ/mol$O_2$ for most carbonaceous fuels and oxygen heat carriers) is a common characteristic in all solid fuel combustion and CLC systems. As in any other reactor systems, fast kinetics are beneficial to reduce gas-solid contact times (and hence the reactor volumes) required to achieve a certain level of conversion. However, fast kinetics and high enthalpies are also behind the problems associated with the appearance of hot spots and the narrow moving reaction fronts in packed bed of solids that make it difficult the effective extraction of heat from the reaction front.

Another family of potential applications for improved gas heater reactors are those designed to operate the heater reactor in an intermittent manner as part of an energy storage system. It is generally accepted that future electricity networks will need energy storage methods to back up renewable energy systems, intermittent by nature in their power output. In the current state of the art, the intermittent nature of renewable power entering a large electricity distribution network is partially compensated with back up fossil power systems, that emit $CO_2$ and other pollutants and have several technical challenges linked to the need of fast load transitions and short ramp up times. An alternative to these fossil fuel based systems are Thermochemical Energy Storage processes, involving reversible gas-solid reactions at high temperatures. These can be designed for large scale applications as part of an electricity distribution network, or as small scale for disperse and mobile applications. These energy storage technologies remain at research level, with a variety of materials and process concepts being investigated (see a recent state of the art review by L. Andre et al.: "Screening of thermochemical systems based on solid-gas reversible reactions for high temperature solar thermal energy storage", Renewable and Sustainable Energy Reviews, 64 (2016) 703-715)). Of particular interest for this invention are those systems based on reversible oxidation/reduction reactions of metal oxides and sulfides (such as those in CLC systems), the carbonation/calcination reactions of metal carbonates (such as the carbonation of CaO with $CO_2$ followed by the calcination of $CaCO_3$ to regenerate CaO) or the hydration/dehydration reactions of $CaO/Ca(OH)_2$. Some of these materials are of very low unit cost and therefore allow for large batches of the storage material to be used in the energy storage system. The reactions are reversible and can theoretically take place at the high temperature and pressures desired to design efficient Brayton cycles. However, as noted above for similar systems, the challenges remain for the practical implementation of these reactions at the necessary high temperatures, high pressures and large gas flows in these gas-solid reactors. In particular, when the gas heater is located upstream of a gas turbine.

Of interest for this invention is a device disclosed in GB1467277 that facilitates the contact between solid particles and a large flow of fluid that passes parallel to a layer of solid particles. The device contains fluids conducts that are empty of solids and that cross through a region packed with solids. The wall of the gas conducts has orifices to make it permeable but not selective to fluids, while effectively separating the solids from the fluid. The device is intended to treat a large quantity of waste gases requiring removal of trace gas components (sulphur and/or nitric oxides) by reacting these gases with the solid or to deionize waste water. GB1467277 considers irrelevant the properties of the perforated sheets or nets separating the solids from the fluid as long as they have mesh size capable of preventing the solid particles from slipping through the fluid stream. However, this device was never intended as a gas heater, as there is no relevant heat source available in the bed of solids to heat up the large flow of gas flowing through the gas conducts or the large flow of water for deionization.

From the above review of the state of the art it is clear there is a lack of viable heater reactors using as a heat source the high temperature reaction of a solid (a carbon rich fuel, a metal or reduced form of metal oxide, a sulphide, etc) with a gas (oxygen, $CO_2$, water vapour etc.). In particular when such reactions have to take place at high pressures and upstream of a gas turbine, in order to achieve the high energy conversion efficiencies of typical Brayton cycles. On the other hand, considering the high energy storage density known for a wide range of low cost solid materials that can be oxidised by $O_2$, carbonated by $CO_2$, or hydrated $H_2O_{(v)}$ at high pressures; and considering their high enthalpies of reaction and high reaction rates, it is highly desirable to have a viable reactor to undertake such reactions in a stable and controllable manner. Ideally, the working fluid should flow at high pressure and be heated up to a very high temperature in order to efficiently drive a heat engine of the type of a Brayton cycle. Ideally, in order to avoid solid entrainment and minimise pressure drops, the working fluid should be in no direct contact with the reacting solids and be heated by heat transfer from a wall as in indirect fired cycles. This will require a large effective heat transfer area that puts in contact the working fluid with the region of reacting solids. Therefore, such ideal reactor should be able to minimize the generation of hot spots within the packed bed of highly reactive solids and avoid the generation of heat reaction fronts despite the high reactivity of the materials.

It can be concluded that the problem of a cost effective reactor for heating a gas, operating at very high temperatures and pressures and using as a heat source the heat from highly exothermic gas-solid reactions, remains largely unsolved.

## BRIEF DESCRIPTION OF THE INVENTION

A first object of the present invention is a reactor for heating a gas by reaction with solids, said reactor comprising gas conducts crossing through a region packed with the solids, said gas conducts having walls that are permeable but not selective to gases while effectively separating the solids from the gas, characterized in that:

  i. the walls of said gas conducts present orifices with a length between 1 and 3 mm, while the void fraction of the walls range from 0.1 to 0.5;
  ii. the ratio between the length of said gas conducts and their effective diameter ranges from 200 to 1000;
  iii. the temperature of the region packed with the solids is between 500 - 1500ºC, which is sufficiently high as to simultaneously promote the heat transfer towards the gas and the high reactivity of the solids with the active components of the gas, that is therefore forced to diffuse from the gas conducts through the orifices of the gas conduct walls.

The reactor is used for heating a large flow of gas using heat from highly exothermic gas-solid reactions, following the principles of indirect fired cycles to prevent the contamination of the gas with solid particles. Such arrangement in the reactor of this invention allows for the overall reaction rate of the solids to be controlled and largely slowed down by the diffusing step of the reactive gas through the orifices of the permeable walls of the gas conducts. This means that even extremely fast gas-solid reactions at the high temperature conditions of the solids in the reactor when there is direct gas-solid contact (i.e. combustion of a solid fuel or oxidation of an oxygen carrier) will be drastically reduced in their overall reaction rate due to the "bottle neck" effect imposed by the diffusion of the active gas component of the gas through the orifices.

The term orifices refers herein to the small gas openings between the two sides of the gas conduct walls. These are non selective respect to gases, as they are assumed to be several orders of magnitude larger in diameter than any of the gas molecules present in the reactor. Therefore, and for simplicity, gas diffusion is assumed to be governed by Fick's law. By arranging the design of the orifices (in terms of effective length and effective area of the conduct wall occupied by the orifices) to reduce the overall rate of gas-solid reactions to a prefixed value, it is possible to reduce the heat generation rates in a way that these can be evenly distributed through the reactor. If the concentration of the reactive gas is allowed to remain high at the exit of the reactor (as it is the case when burning fuel gases with air in existing combined cycles), the reaction can progresss at comparable rates throughout the entire reactor and hence the heat generation takes place evenly throughout the reactor. In these conditions the full area of the gas conducts can be effectively used to heat up the gas, in contrast with gas-solid reactor schemes involving narrow reaction and heat generation fronts described in the state of the art.

In a preferred embodiment the gas is air, and the reactive component of the gas is oxygen.

In further preferred embodiments, the packed solids form a bed which comprises a reactive component selected from a carbonaceous fuel, a transition metal, a partially oxydized transition metal, calcium sulfide or calcium oxide. The carbonaceous fuel is selected from a biochar, a pet coke or any other low ash and low volatile solid fuel. The transition metal is selected from oxygen carriers of Fe, Ni, Cu, Mn or Co. The reactive component of the solids is typically supported on a porous support with high thermal conductivity to enhance the heat transfer from the reacting solids towards the conduct walls.

Optionally, the packed solids contain an additional solid material that does not participate in the reactions but has high thermal conductivity, selected from silicon carbide (with thermal conductivities of 120 W/(mK)) or high temperature metallic alloys (with thermal conductivities of 20 W/(mK)) and that can be accommodated in the packed bed of solids in the form of fins, as in other heat exchanger devices.

In preferred embodiments the wall of the gas conducts are made using high temperature metal alloys such as CrNi alloys, that can be perforated with small orifices and complemented with fins penetrating the region packed with the solids to enhance the heat transfer from the reacting solids to the wall of the gas conduct.

In particularly preferred embodiments, designed as described in the examples, the ratio formed by the product of the length of said gas conducts and the void fraction of the conduct walls, divided by the product of the effective diameter of said gas conducts and the length of the orifices in the conduct walls, is comprised between 50000 and 300000 $m^{-1}$, more preferably between 100000 and 200000 $m^{-1}$.

In a particularly preferred embodiment the bed of solids comprises calcium oxide. In this embodiment, the gas can be a combustion flue gas and the reactive component of the gas is carbon dioxide and alternatively the gas is any humidified gas and the reactive component of the gas is water vapour.

Another object of the present invention is the use of a reactor as previously defined as the gas heater part of a Brayton cycle for power generation, with the air inlet at a pressure comprised between 10 and 30 bar and temperatures comprised between 500ºC and 700ºC, and gas exit temperatures comprised between 900ºC and 1500ºC and a pressure drop below 10% of the inlet. The process further comprises the following cyclic steps:

- charging of a batch of reacting solids
- preheating of the reacting solids
- cooling of the reaction products and
- discharge of the solid reaction products.

wherein the heating of the gas by reaction with solids takes place after the preheating step and before the cooling step. Optionally, the process further comprises an additional regeneration step of the solids within the reactor by using a reducing fuel gas selected from hydrogen or natural gas.

As another possible use, the reactor is the air reactor of a chemical looping combustion process for power generation comprising a series of cyclic steps, where the oxidation of the reacting solids by air is followed by a regeneration of the reacting solids by their reaction with a fuel gas to produce a concentrated stream of $CO_2$.

## DETAILED DESCRIPTION OF THE INVENTION

A first object of the present invention is a reactor for heating a large flow of gas using heat from highly exothermic gas-solid reactions, following the principles of indirect fired cycles to prevent the contamination of the gas with solid particles. The invention uses as a starting point a device similar to the state of the art described by GB1467277, which allows the contact between a bed of solid particles and a large flow of gas that passes parallel to the bed of solid particles, separated from the gas with a perforated wall or net, that is fully permeable to gases. The reactor of this invention comprises at least one gas conduct crossing through a region packed with the reacting solids, allowing for a large bypass of the gas through the reactor without entering into direct contact with the solids. This also allows a low pressure drop in the passage of a large flow of gas through the reactor. The gas conduct walls are permeable but not selective to gases, while effectively separating the solids from the gas. The reactor can have a multiplicity of parallel gas conducts. Each gas conduct is surrounded by a bed of reacting solids. The reactor is characterized in that:

i. the walls of said gas conducts present orifices with a length between 1 and 3 mm, while the void fraction of the walls range from 0.1 to 0.5;
ii. the ratio between the length of said gas conducts and their effective diameter ranges from 200 to 1000;
iii. the temperature of the region packed with the solids is between 500-1500ºC, which is sufficiently high as to simultaneously promote the heat transfer towards the gas and the high reactivity of the solids with the active components of the gas, that is therefore forced to diffuse from the gas conducts through the orifices of the gas conduct walls.

Using the Fick's law, that governs the diffusion of gases, the fraction of the wall of the gas conducts occupied by orifices, and the length of the orifices, can be dimensioned so as to limit the flux of the reacting gas between both sides of the wall to a maximum flux attainable when the concentration of the reacting gas is close to zero in the side of the wall occupied by the bed of solids. In these conditions, the overall reaction of solids can progress with very low concentrations of the reacting gas in the vicinity of the reacting solids, so that the overall reaction rate is limited by the maximum diffusion flux of reactant through the orifices of the wall of the gas conducts.

The reactor is enclosed by an external thermal insulation layer and a non-permeable wall that can withstand high pressures. The thermal insulation layer protects the external non-permeable wall from the high temperatures in the interior of the reactor. This arrangement allows the operation of the reactor at high pressure while the heat transfer from the heat source to the gas takes place at the same pressure in both sides of the gas conduct walls. This is an important advantage respect to equivalent indirect fired cycles, that require much thicker and costly gas conduct walls to withstand the high pressure difference between the heat source and the interior of the gas conducts containing the working fluid.

The active gas component is preferably oxygen in air and the gas is air or its reaction products with the solid. Since the supply of oxygen to the solids is highly restricted by diffusion of oxygen through the orifices of the wall of the gas conduct, the time required for the full oxidation of the fuel particles, or oxygen carrier particles, in the bed of solids, can be very long (hours to days) compared with the times (seconds to minutes) when there is a direct contact of the reacting solids with the gas at the same pressure and temperatures. The reduced rate of reaction due to the limited supply of oxygen to the solids also prevents the appearance of neat reaction fronts in the packed bed of solids. In addition, in order to further minimize the risk of temperature profiles perpendicular to the gas conduct walls, the packed solid material may contain an additional solid material that does not participate in the reactions and has high thermal conductivity (i.e. higher than 20 W/mK), selected from silicon carbide or high temperature metalic alloys. For the same purposes, the packed solid material may be intruded by fins of a material with high thermal conductivity such as a metal alloy, connected to the gas conduct walls, in order to increase effective thermal conductivities of the packed bed of solids.

It is possible for a skilled person in the art to estimate the necessary fraction of the wall of the gas conducts occupied by orifices, and the length of the orifices, as required to establish a certain maximum flux of oxygen, $F_{O2}$ (in mol/m$^2$s referred to a unit of area of the gas conduct), between both sides of the wall. The maximum flux of oxygen towards the region of reacting solids, from the side of the gas conduct occupied by air with an oxygen concentration $C_{O2}$ (mol/m$^3$), is attainable when the concentration of oxygen is close to zero in the side of the wall occupied by solids. Therefore, applying Fick's law:

$$F_{O2} = D_{O2}\, f_o\, C_{O2}/\, l_o \qquad\qquad [1]$$

where $D_{O2}$ is the diffusivity of oxygen in air (in m$^2$/s), $f_o$ is the fraction of gas conduct wall area occupied by orifices and $l_o$ (in m) is the orifice length. The orifices are assumed to be well distributed in the gas conduct wall. They can have any diameter, as long as this diameter is sufficiently small to prevent the solid particles in the packed bed of solids from entering the gas and sufficiently large as to reduce Knudsen diffusion effects, that can impose further limitations to the effective flux of oxygen through the reactor.

The limitation of the overall rate of reaction of the oxygen with the solid fuel or oxygen carrier in the packed bed of solids can be achieved by a selection of the values of $f_o$ and $l_o$ in equation [1]. By limiting oxygen fluxes to the bed of reacting solids a limitation is imposed on heat generation rates in the bed of solids, as the power output from the solid oxidation reactions taking place in a certain volume of reacting solids will be the product of $F_{O2} * H_r$. On the other hand it is clear that, as long as the reactivity of the solid material is sufficiently high, as to be able to react with very low concentrations of oxygen, the overall oxidation rate will only depend on the diffusion properties of the gas through the orifices in the gas conduct wall, independent of the properties of the reacting solids or their degree of conversion. This has several positive implications for the practical viability and operation of this reactor as a high temperature gas heater in Brayton cycles or other heat engines:

- the diffusion flow of oxygen (and the heat generation rate) will remain constant and steady as long as there are sufficient unconverted reactive solids still depleting of oxygen the gas environment in region packed with solids.

- the restricted flow of oxygen to a certain volume of bed of reactive solids implies that the time period from the onset of the reaction to the burnoff, or full oxidation of the solids, can be extended to very long times (hours or days). This time can be decided during the design phase of the reactor, as will be illustrated in the examples below. Hot spots, neat and narrow reaction fronts and sharp temperature profiles can largely be avoided in the bed of solids. Indeed, as illustrated in the examples below, the whole mass of solids in a large reactor can be arranged to be oxidized in a steady, evenly distributed manner.

- The relatively slow overall process of oxidation of the solids allows for a quasi-homogeneous power generation profile in the entire volume of the reactor, allowing for the effective heat transfer to the air flowing through the gas conducts from the entire surface of the wall gas conducts crossing through the reactor.

As noted above, the heat generation rates are ultimately limited by the diffusion of oxygen through the wall orifices, largely controlled by the particular choice or design of the orifice parameters (mainly the values of $f_o$ and $l_o$ noted above). Therefore, an otherwise extremely fast reaction like the oxidation of carbonaceous fuels or oxygen carriers with air at high temperature and pressure (that could take seconds to minutes under direct gas-solid contact) can be carried out in a highly distributed manner in the entire reactor, as indicated in a few design Examples chosen to illustrate a range of possible designs of the reactor.

An important consequence of the design Examples of the reactor, ultimately intended to restrict with the orifices in the walls of the gas conduct the flow of a reacting gas towards a region of packed solids with extreme affinity to react with such gas, is that the gas conduct needs to have a large aspect ratio (ratio between the length of the conduct and its effective diameter) to compensate for the much slower rate of gas-solid reactions. As indicated in the Examples, for the case of air as the working gas fluid and oxygen as reacting gas, and considering typical consumption of oxygen between 10% and 30% of the oxygen air inlet of the reactor as needed to generate sufficient thermal power during the oxidation of the solids to heat up the air from an initial temperature between 400-700ºC to an outlet temperature of 1000-1500ºC, the ratio between the length of the gas conduct and its effective diameter will preferably be between 200 and 1000. These are unusually large aspect ratios for packed bed reactors, but it will be evident to the skilled in the art that pressure drop of the gases can remain moderate in the reactor (below 10% of the inlet pressure of gases to the reactor) thanks to the large bypass of gas through the gas conducts, without entering in direct contact with the bed of solids. Furthermore, as indicated by the design examples, in order to moderate the number of gas conducts necessary to treat a given total flow of air, it is preferred to use smaller effective conduct diameters (0.005 to 0.02 m) for applications where the overal combustion or oxidation reaction of the solids generates less than 1 MW or the duration of the oxidation cyle is less than 1 hour, while larger effective diameters of the gas conduct (0.05 to 0.2 m) should be used for applications with thermal outputs of more than 100 MW and/or duration of the oxidation times in the scale of days.

As noted above, the wall of the gas conduct is permeable to all gases, including gases that are non reactive and that must be free to move through the orifices located in the wall of the gas conducts and equilibrate the pressures in both side of the wall when the gas-solid reaction implies a change in gas volumes (as it is the case when oxygen reacts with an oxygen carrier). The fact that there is no pressure different in both sides of the gas conduct wall allows for the use of relatively thin and low cost gas conduct walls, preferably between 1 and 3 millimeters thickness.

The walls of the gas conducts in the device of this invention can be manufactured with state of the art materials for high temperature applications. Particularly relevant for the object of the invention is a range of porous ceramics that can be commercially manufactured in a range of shapes (including stacked sheets to form gas conducts, honeycomb shapes, or simply tubular pipes) and that can withstand temperatures over 900ºC to 1500ºC. As an example, WO 2004/013538 includes a brief review of the state of the art of porous burners using these porous materials, with porosities as high as 0.9 and very low pressure drops. It must be noted that these permeable materials are nonselective respect to the diffusion of gases through their pore network. Therefore, they can have lower cost and be more robust and stable than equivalent ceramic membranes manufactured with functional materials with high selectivity towards one of the gas components.

In another preferred embodiment, the gas conduct walls are manufactured with high temperature metal alloys (i.e. CrNi alloys), that are available in many shapes and conduct wall/sheet thicknesses, and that can be drilled or perforated with small orifices, complemented with fins to enhance heat transfer, or made porous to allow a certain permeability of a gases trough the metallic wall.

Since the ratio between the length of the gas conducts and their effective diameter is very high (ranging from 200 to 1000) and the differences in temperatures between the inlet and outlet of the gas conduct wall can be very large, it may be convenient to have conduct walls of different length manufactured with different materials, achieving a better matching between local temperatures and material properties. It must be noted that these sections do not necessarily need welding, as there is no pressure difference between the interior of the gas conducts and the region packed with the solids.

When air is the gas working fluid flowing through the reactor and oxygen is the reactive gas reacting with a solid fuel or an oxygen carrier, it has been found that many devices designed as in the Examples of this invention, in a wide range of scales, can achieve the desired targets of heating of the gas (delta temperatures between 500-800ºC noted above) when the product of the length of the gas conduct and the void fraction of the conduct wall (assumed to take values within the central range of state of the art material between 0.1 and 0.5), divided by the effective diameter of the air conduct and the length of the orifices in the conduct wall, is between 50000 and 300000 $m^{-1}$, preferably between 100000 and 200000 $m^{-1}$.

On the other hand, the reactor enclosure is connected to at least a gas entry pipe and a gas exhaust pipe. It can be further connected to other external gas pipes and solid entry and discharge ports, to be used to introduce new batches or continuous flows of regenerated solids, or to feed fuel gases to regenerate the solids to their initial state before reacting with the gas.

A preferred choice of reactive solid materials is a carbon rich material (like a bio-char or a pet coke or any other low volatile solid fuel) because they have great affinity to oxygen in air at high temperatures. Such a carbon rich material will facilitate the air combustion process in the reactor to be controlled by the oxygen diffusion through the orifices, as there will be no volatiles components in the fuel that could independently diffuse trough the orifices and alter the overall rate of combustion during burn off. The combustion of such fuel may also be limited by the diffusion of CO and $CO_2$ in the orifices, in the opposite direction to the oxygen diffusion. In any case, the high temperatures and excess of $O_2$ in the air pipes will ensure that CO burns in the vicinity of the orifices, contributing to the heating up of the gas pipe wall and hence, the gas flowing in such pipe. A disadvantage of the use of these carbon rich materials is that the device will emit $CO_2$ when air is used as the comburent. This can be solved by using as a comburent a mixture of $O_2$ and $CO_2$ in any suitable proportion, as in state of the art oxy-combustion systems.

Another preferred choice of solid material to operate the reactor is one of those currently used in chemical looping combustion applications (Fe, Ni, Cu, Mn, Co and their oxides, supported in a range of porous ceramic supports, or other redox systems like $CaS/CaSO_4$). The oxidation of these solids in the reactor of this invention will only emit a gas stream of gas depleted in oxygen. When the material is fully oxidized after a certain time, it can be reversibly reduced with a carbon containing gas (to produce a rich stream of $CO_2$ and water vapor) or with $H_2$ produced from a non carbon emitting source (for example electrolysis of water using renewable electricity when there is an excess available) or with thermal energy (in the particular case of $Mn_2O_3$, which is a material of relatively low cost that can be reduced to $Mn_3O_4 + O_2$ when heated to temperatures over 900ºC).

Another preferred choice of solid material to operate the reactor is CaO, when the gas entering the reactor contains $CO_2$. The exothermic carbonation of these solids to form $CaCO_3$ will release the necessary thermal power to heat up the gas flowing into the reactor. The operation of the device at high pressures of 10-30 bar characteristic of Brayton cycles allows the formation of $CaCO_3$ up to temperatures of up to 1000ºC. The reactor will emit a gas stream of gas depleted in $CO_2$. When the CaO rich material is fully carbonated after a certain time, the resulting $CaCO_3$ can be extracted to be reversibly calcined in a different device or it can be regenerated within the reactor, preferably using energy produced from a non carbon emitting source (i.e. renewable electricity generated when there is an excess available) and possibly aided by steam (that by reducing the partial pressure of $CO_2$ is known to enhance the calcination rates).

Another preferred choice of solid material to operate the reactor is CaO, when the gas entering the reactor contains $H_2O$. Such system would operate by exploiting the exothermic character of the hydration reaction of CaO to form $Ca(OH)_2$ at high temperatures (and pressures) and the possibility to regenerate the hydrated material back to CaO using renewable sources of energy.

An important advantage of the reactor of this invention is that it can operate at the high pressures that are typical in many existing energy power systems operating with heat engines using clean gases. As the pressure drop of the gas through the empty gas pipes of the reactor will be small (ideally less than 10%), the reactor can be integrated as a heater in Brayton cycles or other heat engine schemes. The gas turbine blades are protected, as it is the case in existing externally fired cycles, because the reacting gas does not enter into direct contact with the reacting solids. Compressed gas enters the gas conducts of the reactor, heats up in contact with the wall of the conducts and leaves the reactor at the necessary high temperature for subsequent gas expansion in the gas turbine. This is particularly important when operating the reactor with carbonaceous fuels, as it offers a solution for the problem of burning a solid fuel in the heater of Brayton cycle, as the air does not enter in direct contact with the burning particles.

The reactor is preferably operated intermittently, although moving bed designs respect to the reacting solids could be envisaged from the state of the art of moving bed reactors and GB1467277. Suitable methods for continuous operation can also be achieved when more than one reactor is arranged to operate in parallel, so that the gas turbine of the Brayton cycle receives continuously a flow of hot compressed gas. When one of the reactors is operated as gas heater, the other reactor is operated in regeneration mode (in order to regenerate the solid material with affinity to oxygen) or is being discharged of reacted solids and charged again with a new batch of active solids. In most embodiments, it may be necessary to pre-heat to suitable temperatures the reactor and the gas entering the reactor, to ensure that the operation of the reactor commences at the stable reaction conditions defined by the controlled flow of active gas by diffusion through the porous conduct walls.

The reactor can be part of a wide variety of embodiments and methods in the state of the art to heat up gases like air or like flue gases, in different scales and modes of operation, particularly when aiming at intermittent power generation.

## BRIEF DESCRIPTION OF THE DRAWINGS

A set of drawings is attached wherein, with illustrative and non-limiting character, the following has been represented:

**Figure 1:** shows a general scheme of the reactor of this invention comprising empty gas conducts manufactured with a material permeable to gases, and regions occupied by a bed of packed solid material with a high affinity to a reactive component in the gas, all enclosed in an housing of insulating material and non-porous wall. In the bottom-right of the figure, a detail of an orifice in the gas conduct wall, and the schematics of the gas diffusion mechanism in the wall orifice, is provided.

**Figure 2:** shows a general scheme of the reactor integrated in the gas heating part of a Brayton cycle

**Figure 3:** shows a general scheme of a chemical looping system using at least two reactors of this invention (top: oxidising the oxygen carrier with gas; bottom: reducing the oxygen carrier with a fuel gas).

## PREFERRED EMBODIMENTS OF THE INVENTION

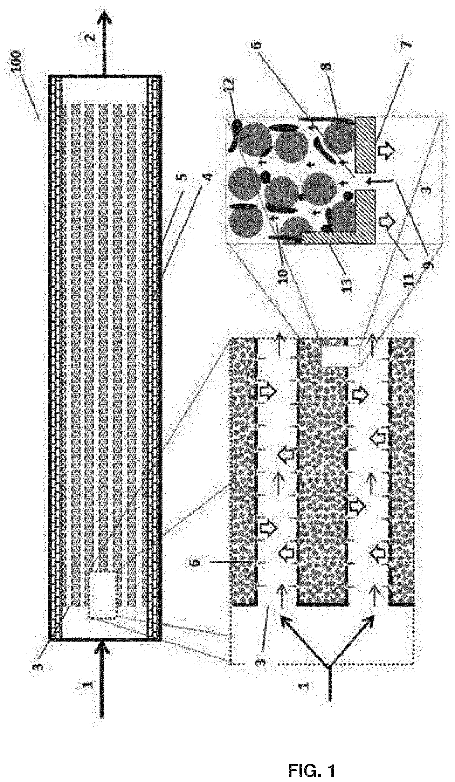

The main components of the reactor are represented in Figure 1. The gas heater device (100) is fed by a flow of gas (1) that leaves the reactor in (2) at high temperature. The inlet gas (1) is first distributed in a multiplicity of gas conducts (3). The conduct walls remain at high temperature because of an exothermic gas solid reaction taking place in the reactor. There is a layer of insulating material (4) to prevent heat losses and a non permeable wall (5) that can withstand high pressures and that is protected from the high temperatures in the reactor by (4).

The conducts have walls with orifices (6) separating the gas flow from a bed of solids (7) with solid particles (8) with a high affinity to react at high temperature with an active component in the gas. As a result, a certain flow (9) of the active gas component diffuses through the pores of the conduct wall (6) to react with the solids (8). As a result of the gas solid-reaction, removing the active gas component from the gas phase, and the diffusion control of the flux of active gas component by the orifices, such active gas component is depleted (10) in the void regions between the particles that make the bed of solids (7). The gas (1) is heated in contact with the conduct walls with the heat (11) originally generated during the reaction between the active solids and the active gas component. Such heat must flow through the bed of solids (7) in the vicinity of the conduct walls to the wall. To facilitate the transfer of such heat towards the conduct walls, the bed of solids (7) may contain inert particles or filaments (12) of high thermal conductivity or be penetrated by fins (13) connected to the conduct wall.

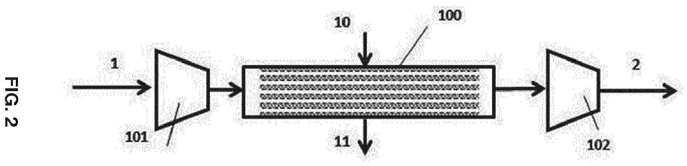

A particular application of the preferred embodiment of Figure 2 is the oxidation in gas of oxygen carriers used in chemical looping combustion, CLC, and reforming applications [a family of metals (Ni, Cu, Mn) or partially oxidised metals (FeO, Fe3O4) or sulphides (like CaS)]. An important advantage of these materials respect to carbonaceous fuels is that their oxidation step does not emit $CO_2$. Example 1 illustrates a design of an emission-free intermittent power generation device using as a heat source the oxidation of an initial batch of CaS to $CaSO_4$. The oxidation of CaS in the reactor of this invention is integrated in a Brayton cycle (for simplicity, in Figure 2, only the heater part of the cycle is shown). CaS solids must be preloaded through a suitable port (10) and preheated to temperatures over the ignition temperatures, before the oxydation process starts. Air (1) goes first to a compressor (101) and enters the reactor (100) at 400-700ºC. For simplicity, preheating stage that may be needed between (101) and (100) are omitted in the figure. During the time period required for oxidation of the solids in (100), the heated air depleted in oxygen (2) is expanded in the gas turbine (102). After the oxidation step is completed, the resulting $CaSO_4$ can be reduced again to CaS within the reactor, for example by feeding a flow of renewable hydrogen. If needed, it can also be extracted from the reactor (11) and reduced to its initial form (CaS in the Example 1) in a separate reactor, using a suitable fuel gas and suitable methods described in the state of the art processes of chemical looping combustion and reforming. Example 1 illustrates that the system of Figure 2 can find applications as an intermittent power generation device, for example to back up large scale power generation systems. It could also be applied at much smaller scales, for disperse, smaller applications, including transport, as illustrated in Example 2.

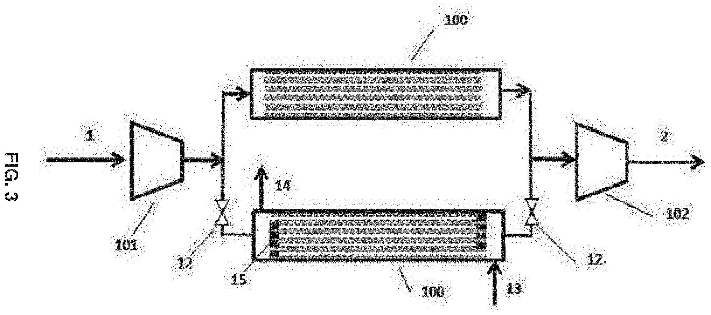

In another preferred embodiments of the invention, represented in Figure 3, the reduction step of the oxygen carrier is carried out in the same reactor (100), arranged to be able to operate under reducing conditions by receiving a feed of a gas fuel (13) to reduce the solids back to their original state and generate a gas stream (14) that mainly contains $CO_2$ and $H_2O$ and that can be used or stored to avoid emission of $CO_2$ (for example by geologically storing the $CO_2$). Although the reduction strategy of the solids is not part of the present invention, it is interesting to note that the reactor can also operate as a "fuel reactor" to undertake these reduction reactions, that are usually endothermic (except in the case of the CuO to Cu redox system), typically slower in what refers to reaction rates, and requiring much lower gas flow rates (of fuel gas) than in the gas reactor. The reactor can be arranged to use the porous conduct walls as a gas distributor of the fuel gas, in a way that the full gas enters into contact with the solids. This can be achieved in many different combinations (see bottom of Figure 3) using suitable plugs for of the gas conducts to facilitate a flow of fuel gas with a component perpendicular to the gas conducts and in intimate direct contact with the solids. In general, since the bed of solids and the gas conduct walls are permeable to gases, a wide diversity of mechanical solutions, as described in the state of the art of packed bed reactors, can be implemented for fuel gas distribution (13) through the bed of reacting solids, while evacuating the reaction products from the reactor (14). Example 3 illustrates one of such possible systems, using as reactive solid a batch of oxygen carrier materials containing Ni (7), that oxidises at high temperatures to NiO with the 02 contained in the air (1).

Another particular application of the preferred embodiment of Figure 2 is when the solid with high affinity to oxygen is a carbonaceous fuel. For the combustion in the reactor of this invention of a solid carbonaceous fuel using a Brayton cycle (for simplicity, in Figure 2, only the heater part of the cycle is shown), the fuel must be preloaded through a suitable port (10) and preheated to temperatures over the ignition temperatures, before the combustion process starts. The solids residues resulting after combustion can be discharged from the reactor through a second port (11). The fuel is preferably char, pet coke or any other solid fuel with low ash and volatile content. Low volatile content fuel is preferred in the operation of the reactor in order to minimise the intensity of hot spots when volatiles diffuse from the bed of solids and burn in the gas conducts. Example 4 illustrates that the system of Figure 2 can find applications as an intermittent power generation device, for example to back up large scale power generation systems. It could also be applied at much smaller scales, for disperse, smaller applications, including transport, as illustrated in Example 2 for the CaS oxidation reaction.

In another preferred embodiments of the invention (see Figure 3), the solid with affinity to react with a gas is CaO and the reactive gas is the $CO_2$, contained in a combustion flue gas or in a synthetic mixture of air and $CO_2$ from a reservoir or $CO_2$ storage site that is part of an energy storage system. The carbonation reaction step of the CaO particles is carried out in the reactor (100), to heat up the gas stream containing CO2 (1) previously compressed in (101) and expand the gas with reduced content in CO2 (2) in (102). The CaO particles (reference 7 in Fig. 1) are located in the space between the conducts (reference 3 in Fig. 1). The heat generated in the carbonation reaction of CaO with the $CO_2$ (reference 5 in Fig. 1) through the conduct walls (4) heats the gas (1) by heat transfer from the wall (such heat flow is represented by the arrow (6) in Figure 1). In general, the reactor and the use thereof as a heater using the exothermic carbonation of CaO with $CO_2$ does not differ from the reactor and and the use thereof described above for the case of oxidation reactions of a solid. The skilled in the art will be able to generate design rules similar to those applied for the examples involving solid oxidation reactions. The reactor and the uses thereof can be part of thermochemical energy storage systems using CaO/CaCO3 chemical loop, by regenerating the CaO (decomposing CaCO3 into CaO and CO2) in a different step using renewable energy or renewable H2.

In another preferred embodiments of the invention, the solid with affinity to react with a gas is CaO and the gas is the $H_2O(v)$, contained in a combustion flue gas or in any other synthetic mixture with sufficient fraction of $H_2O$ vapour. The skilled in the art will be able to generate design rules similar to those applied for the examples involving CaO/CaCO3 reactions. The reactor and the use thereof can be part of thermochemical energy storage systems using CaO/Ca(OH)$_2$ chemical loop, by regenerating the CaO (decomposing Ca(OH)$_2$ into CaO and H2O) in a different step using renewable energy or renewable H2.

In general, the use of the reactor of this invention can be implemented in a wide variety of systems described in the state of the art to generate thermal power from the reaction of a solid with a gas. In particular, the reactor is most suitable for the combustion of solid fuels at high pressure and for chemical looping combustion systems, chemical looping reforming systems or combinations thereof at high pressure as well as for the energy discharge part in thermochemical energy storage systems operating at high pressures and involving reversible gas-solid reactions: oxidation/reduction, carbonation/calcination, hydration/dehydration etc. For those skilled in the art, other devices, advantages and characteristics of the invention may occur in view of the description or uses of the invention. Therefore, the following examples involving oxidation reactions only are provided for illustrative purposes only, and are not intended to limit the scope of this invention.

## EXAMPLES

The particular examples of design of the reactors described in the following sections have been solved for certain solid oxidation reactions only, using a range of material properties of solids and gases that are available in the state of the art and in textbooks such as "Perry's Chemical Engineering Handbook, sixth edition". Furthermore, a set of assumptions are adopted for simplicity, that are summarised below. These can be refined in future applications, but do not alter the object of the invention:

- It is assumed that the oxidation reactions of the solids are extremely fast, so that the oxygen partial pressure in the vicinity of the reacting surfaces is close to zero. Furthermore, there is sufficient porosity between and within the solids particles as to allow free diffusion of oxygen in the gas phase.

- The controlling step of the overall process of solid oxidation is the diffusion of oxygen through the small orifices in the conduct wall. The oxygen diffusion flux (mol $O_2/m_2s$) follows Fick's law, as it is assumed to be proportional to the void fraction of the wall, $f_o$, the oxygen diffusivity in gas, $D_{O2,z}$, at the average local temperature and pressure conditions in both sides of the wall, the local concentration of oxygen in the gas conduct $C_{O2,z}$, (for the purpose of estimating the oxygen flux, the concentration of $O_2$ in the other side of the wall is assumed to be zero), and inversely proportional to the thickness of the wall or the length of the orifices traversing the conduct wall, $l_o$.

- The transfer of heat from the conduct wall to the gas flowing in the gas conduct is proportional to the local temperature difference between the wall and the gas. The proportionality constant is a single heat transfer coefficient, $h_z$, that can be calculated from the local average gas properties between the wall and the gas as it is proportional to the Nusselt number and inversely proportional to the equivalent internal diameter or characteristic distance of the gas conduct. The conduct wall is assumed to have very high thermal conductivity. The bed of solids containing reacting particles is assumed to have a certain effective thermal conductivity, that can be tailored within certain values by choosing the ceramic support for the active oxygen carrier or by introducing a third solid to enhance the effective thermal conductivity (a third solid with high thermal conductivity >20 W/mK). The maximum temperature difference between the solid surfaces where oxidation reaction is taking place and the wall is therefore assumed to be relatively small.

- Axial thermal heat transfer by conduction along the longest dimension of the reactor that coincides with the direction of the gas flow is assumed to be negligible. This is mainly because the very large aspect ratio between the length of the reactor and the half of the distance separating two neighbouring conducts, that determines the maximum thickness of solids associated to each gas conduct.

- Pressure drop of gas flowing in the gas conducts of the reactor can be calculated with standard correlations for the Fanning friction factor for turbulent flows (equation 5-66 in "Perry's Chemical Engineering Handbook, sixth edition").

- All the examples are calculated assuming conducts of cylindrical geometry for the gas conducts and for the complete reactor. Indeed, horizontal flat sheets conducts or channels with rectangular shapes may more suitable when operating reactors that use carbonaceous fuels with low ash content, so that the bed of fuel is standing on the porous flat sheet an reduces in height as the fuel is consumed, while keeping the reacting solids very close to the permeable wall. However, this and other geometries typical in the state of the art of gas solid contact can be calculated following similar methodology as below, using available correlations for heat transfer and mass transfer specific for these geometries.

- For simplicity, the length of the orifices is assumed to be identical to the conduct wall thickness.

A critical design target for the reactors is to be able to reach a steady state where, at any distance from the entrance of the gas, z, the heat transferred from the wall to the mass flow of gas, $m_g$, during its advance from z to a point in its proximity located downstream at z+ dz, is equal to the rate of generation of heat by the exothermic oxidation of the solids. Since the rate of the oxidation reaction is controlled by diffusion of oxygen in the orifice, as long as the assumptions stated above are held, a heat and mass balance between z and z+dz yields:

$$m_g \, C_{pg} \, (dT_{g,z}/dz) = h_z \, \pi \, d_c \, (T_{w,z} - T_{g,z}) = - \, D_{O2,z} \, \pi \, d_c \, f_o \, C_{O2,z} \, \Delta H_r / \, l_o \qquad [2]$$

where $T_{g,z}$ and $T_{w,z}$ are the temperatures of the gas and the wall respectively, $d_c$ is the equivalent diameter of the gas conduct and $\Delta H_r$ is the enthalpy of oxidation of the solid per mol of $O_2$.

A common design objective in the examples below is to maintain as much as possible a stable temperature output of the gas at the exit of the reactor, by maintaining stable axial temperature profiles in the reactor. This steady state is achieved at a temperature in which the heat generation rate by reaction is equal to the heat transferred from the porous conduct wall to the gas flowing in the conduct. The design of the reactor must be such as to control the heat generation rate using the porous properties of the gas conduct wall. For this purpose, it is important to exploit the fact that the term in the right hand size of the equation [2] is largely insensitive to changes in the conversion of the solids. It is also insensitive to pressure for a volume fraction of $O_2$ in the gas, because the opposite effects of pressure on $D_{O2,z}$ and $C_{O2,z}$. Furthermore, since the enthalpies of oxidation are high, and the gas is typically preheated before entering the reactor, a heat balance in the reactor reveals that only a few percentual points of the 21% initial volume fraction of oxygen will be required to heat up the gas by a few hundred degrees when reacting with the solids. This means that the oxygen volume fraction tends to decrease only slightly with the bed length, z. On the other hand, diffusivity of oxygen increases with temperature (proportional to $T^{1.724}$ in the correlation of footnote 2 of Table 1) but the concentration $C_{O2,z}$ (in mol/m$^3$) is inversely proportional to temperature. This, together with the decrease in volume fraction of $O_2$ with the bed length, z, allows for a moderate increase in the oxygen flux along z for a given set of parameters $d_c$, $f_o$ and $l_o$. However, these

three parameters can be chosen in practice with a large degree of freedom (see Examples below) so that a certain axial profile effective oxygen flux (and hence power generation) per unit of length of the reactor can be predefined. In other words, it should become evident at this point to those skilled in the art that the flow of oxygen diffusing per unit of length (and therefore the thermal power output from reaction per unit of length of an air conduct in the direction of the gas flow) can be tuned to be nearly constant during a period of stable operation from an initial state of solids fully reduced to a final state of solids almost oxidised, as long as the initial state of the solids is at a temperature sufficiently high as to allow the overall oxidation reaction to be controlled by the diffusion through the conduct wall orifices.

Other relationships and trends coming from the application of the equation [1] and [2], or its refinements, will be apparent to those skilled in the art of packed bed reactor design and heat transfer. The three examples below illustrate some practical applications of the basic design rules described above, for four different problems with three different materials with affinity to oxygen. Table 1 compiles the design targets, the number of estimated gas conducts and the main dimension of the calculated reactors, along with the input and output conditions in the gas, assumed to be unchanged at the beginning and at the end of each of the oxidation process of the batch of reduced solids.

### EXAMPLE 1 Back-up power generation device or energy storage device, oxidising a mass of CaS to CaSO4 and using the released energy in a Brayton cycle

In this example (see Fig. 2) the reactor of this invention (100) is applied as a heater of a Brayton cycle to produce 100MW of thermal output during 77 hours, by oxidising during this period a large batch of CaS previously loaded into the reactor containing 1300 kg of active CaS per $m^3$ of bed of packed solids in the reactor (which is about 50% of the volume in the bed of packed solids). At the end of the operational period, the resulting CaSO4 can be discharged or regenerated with a suitable reducing gas (like electrolytic renewable hydrogen). The reactor can therefore be used during the energy discharge cycle of a thermochemical energy storage system involving CaS/CaSO4. The list of the main operating variables and parameters in the device is listed in the column Example 1 of Table 1. They are a combination of assumed values and calculations from the solution of equation 1 and 2, solved in an iterative manner as described above for small finite elements in the direction of the main gas flow, using as inputs the outlet conditions of previous element.

The reactor of Example 1 is fed with compressed gas at 20 bar in a compressor (101) and preheated to 500ºC (1) to generate a flue gas stream (2) at 1266ºC to be expanded in a turbine (102). The batch of CaS is assumed to be preheated over ignition temperatures before the oxidation process starts, for example by using state of the art techniques of regenerative heat exchange in solid beds or by burning a small portion of a gas fuel in the reactor. Therefore, when the air stream (1) enters the reactor, there is a high affinity to oxygen in the region of the reactor occupied by the CaS and the process of CaS oxidation to $CaSO_4$ is assumed to be controlled by the diffusion of $O_2$ through the gas conduct wall orifices. For simplicity, it is omitted in the solution of this example the role of decomposition reactions of $CaSO_4$ to give CaO and $SO_3$, that could translate into a certain diffusion of trace quantities of $SO_3$ from the region with solids to the air stream flowing through the reactor. The mass flow rate of air is fixed to ensure the generation of 100 MW thermal in the reactor under adiabatic conditions, when heating from 500ºC to the exit temperature of the flue gas. The gas velocity through the gas conducts is assumed to be 20 m/s at the entrance of the reactor. The gas (1) is then distributed in 93 pipes having a diameter of 0.1 m and a total length of 300 m. The cross section of the conducts does not change along the axis of the reactor so that gas velocity increases with the increasing temperature of the gas flowing into the reactor up to 38.0 m/s. Other conduct shapes, in particular flat sheets or other rectangular shapes can be equally or more convenient depending to facilitate loading (10) and discharge (11) of solids or their regeneration in contact with a reducing gas. Straight lines with no bends are considered in the Figures and in the Examples, but other arrangement are also possible involving bends, spirals or u-turns of the conducts in order to accommodate the total length of the gas conducts (300 m in this example) into a given volume of the reactors (100). The wall thickness of the gas conducts is assumed to be 2 mm and the fraction of the wall area occupied by orifices or voids is assumed to be 0.12. As indicated by the solution of equation [1] and a mass balance on $O_2$ flowing through the conducts, these wall properties allow for a transfer of oxygen by diffusion towards the bed of CaS, so that the oxygen volume fraction starts with 0.21 and exits the device with 17.1%vol.

The heat transfer coefficient between the gas and the wall at the inlet of the conduct is estimated to be 418 W/m2K from the Nusselt number equation of footnote 1 of Table 1, calculated using the average temperature between the gas (500ºC) and the wall (524.6). Diffusivity of oxygen in the porous wall is calculated at the temperature of the wall with the equation noted in the footnote 2 of Table 1.

In this particular example, and with this simplified problem solving procedure, the reactor will have 2.9 m diameter, without including the layer of insulating material and the non-permeable wall to complete the reactor. The reactor of this example would be able to deliver 100MW of thermal output in energy-efficient Brayton cycles without emitting CO2 following the scheme of Figure 2.

**EXAMPLE 2. Power generation at small scale from CaS oxydized to drive a Brayton cycle**

In this example the reactor of this invention (100) is applied as a heater of a Brayton cycle installed in a small scale application (a building or a vehicle with sufficient space available to accommodate the reactor). The scheme is as in Figure 2 and the design methodology as in Example 1. However, this design example has the specific target of minimization the dimensions of the reactor for a given power output. As noted in Table 1, Example 2, the reactor is in this case intended to oxidise during 6.8 hours the initial batch of CaS contained in reactor containing gas conducts 5 m long. To achieve such a short length, it is necessary to allow a higher rate of diffusion of oxygen through the porous walls of the gas conducts (assumed to have in this case 0.3 vol fraction and just 1 mm of wall thickness). The high rate of $O_2$ towards the bed of solids is also achieved by reducing to 0.01 the diameter of the pipes used as gas conducts. This also favours an increase in heat transfer coefficients wall-gas (to 662 W/m2K at the entrance of the reactor).
The reactor has 0.74 m r total diameter and is able to deliver 1 MW of thermal power. Such reactor could therefore find application in a wide range of distributed power generation systems, including large transport vessels.

**EXAMPLE 3. Chemical looping combustion system**

In this example the reactor of this invention (100) is applied as the air reactor in a chemical looping combustion system of a gaseous fuel (like natural gas etc). The chemical looping combustion system is integrated in a Brayton cycle to deliver maximum energy conversion efficiencies from the original energy contained in the gas fuel. This particular example uses nickel as oxygen carrier to become NiO in the oxidation step, while reducing back to Ni during the fuel combustion step, with NiO oxidising the fuel gas to $CO_2$ and $H_2O$. The packed bed of solids contains 1780 kg of active Ni per $m^3$ of bed of packed solids (which occupy about 20% of the volume in the bed of packed solids).
In this example, when the reactor is in oxidation mode as at the top of Figure 3 is designed to operate with high thermal output (100 MW) targeting shorter cycle times (62 minutes in this example) for the oxidation reaction stage. A total reactor length of 8 m and an equivalent diameter of 3.4 m (without taking into account insulation and closure wall) while the aspect ratio of the individual gas conducts remains 400 (ratio of the diameter of an individual gas conduct to the length of the conduct). Since the Ni/NiO material is known to be highly reactive and reversible in a wide range of temperatures, the reactor has been arranged to have a large number (3003) of small diameter pipes (0.02m of internal diameter) with other properties at listed in Table 1. The calculation methodology to solve equation [1] and [2] is as in Example 1. A multiplicity of other designs can be considered to attempt a more adequate integration of the reactor to the specific requirements of the overall chemical looping combustion system. However, this example indicates that the reactor of this invention is able to solve the problem of high pressure, high temperature oxidation of a bed of oxygen carrier with an inherent control of maximum temperatures in the solids, by limiting the oxygen flow through the permeable gas conduct wall and by relying on the effective heat transfer from such wall to the flowing air in that conduct.

**EXAMPLE 4 Back-up power generation device, burning a carbonaceous solid fuel in a Brayton cycle**

In this example the reactor of this invention (100) is applied as a heater of a Brayton cycle to burn during 37 hours and 30 min a batch of char previously loaded into the reactor through port (10). At the end of the operational period, the fuel is burnt-off and the remaining solid residues (ash, if any), are discharged through port (11). The list of the main operating variables and parameters in the device is listed in the column Example 4 of Table 1.
The reactor of Example 1 is fed with compressed gas at 20 bar and preheated to 600ºC (1) to generate a flue gas stream (2) at 1385ºC to be expanded in a turbine. The batch of char is assumed to be preheated over ignition temperatures before the oxidation process starts, for example by using state of the art techniques of regenerative heat exchange in solid beds or by burning a small portion of the solids in the reactor. Therefore, when the gas in stream (1) enters the reactor, there is a high affinity to oxygen in the region of the reactor occupied by the char and the process of char combustion is assumed to be controlled by the diffusion of $O_2$ through the gas conduct wall. The mass flow rate of gas is fixed to ensure the generation of 100 MW thermal. The air is distributed in 406 pipes, with a diameter of 0.05 m and 100 m long and the pressure is estimated to drop from 20 bar to 18.9. The wall thickness of the gas conducts is assumed to be 2 mm and the fraction of the wall area occupied by orifices in the conduct's wall is assumed to be 0.2. As indicated by the solution of equation [1] and a mass balance on O2 flowing through the conducts, these wall properties allow for a transfer of oxygen by diffusion towards the bed of char, so that the oxygen volume fraction starts with 0.21 and finishes with 16.0%vol. Such system illustrates a possible application of the reactor in back up electric power generation systems, that would be able to use solid fuels (including biofuels like char) in energy-efficient Brayton cycles.

Table 1: Compilation of the design targets, number of estimated gas conducts and the main dimension of the calculated reactors, along with the input and output conditions in the gas during the oxidation process with air of a batch of reduced solids.

|  | Example 1 | Example 2 | Example 3 | Example 4 |
|---|---|---|---|---|
| Type of active solid with affinity to oxygen/oxydized product | $CaS/CaSO_4$ | $CaS/CaSO_4$ | Ni/NiO | $C/CO_2$ |
| Bulk density of active reduced solid (kg/m3 of packed bed) | 1300 | 1300 | 1780 | 700 |
| Thermal power (MW) | 100 | 1 | 100 | 100 |
| Duration of oxidation cycle | 77 hours | 6.8 hours | 62 minutes | 37.5 hours |
| Inlet pressure/outlet pressure (bar) | 20/18.3 | 20/19.6 | 20/19.8 | 20/18.9 |
| Air velocity (m/s) inlet/ outlet | 20/38.0 | 20/36 | 20/33.5 | 20/35.7 |
| L: Reactor length (m) | 300 | 5 | 8 | 100 |
| $d_c$: Effective diameter of air channel (m) | 0.1 | 0.01 | 0.02 | 0.05 |
| $l_o$: Wall thickness or orifice length (m) | 0.002 | 0.001 | 0.001 | 0.002 |
| $f_o$: Wall area fraction occupied by orifices | 0.12 | 0.3 | 0.3 | 0.2 |
| $L/d_c$ | 3000 | 500 | 400 | 2000 |
| $(L*f_o)/(d_c*l_o)$ $(m^{-1})$ | 180000 | 150000 | 120000 | 200000 |
| Number of air channels or air pipes | 93 | 104 | 3003 | 406 |
| Density of active particle $(kg/m^3)$ | 2600 | 2600 | 8908 | 1500 |
| Enthalpy of oxidation (kJ/mol $O_2$) | 480.5 | 480.5 | 479.4 | 393.7 |
| Vol. fraction of active solids in bed | 0.7 | 0.7 | 0.2 | 0.5 |
| Thickness of bed of solid particles (m) | 0.1 | 0.03 | 0.02 | 0.05 |
| Equivalent diameter of device (m) | 2.9 | 0.74 | 3.4 | 3.1 |
| Air temperatures T inlet / Toutlet (ºC) | 500/1266 | 500/1177 | 600/1250 | 600/1385 |
| Wall temperatures inlet/ outlet | 524.6/129 9 | 578/1305 | 702/1398 | 634/1431 |
| h wall-gas inlet/outlet $(W/m^2K)$[1] | 418/353 | 662/560 | 547/485 | 455/400 |
| $D_{O2,z}$ inlet/outlet ($m^2$/s x 1000000) | 5.39/18.3 | 5.39/18.1 | 6.64/18.0 | 6.64/19.2 |

(continued)

|  | **Example 1** | **Example 2** | **Example 3** | **Example 4** |
|---|---|---|---|---|
| O$_2$ volume fraction inlet/outlet | 0.21/0.171 | 0.21/0.176 | 0.21/0.177 | 0.21/0.160 |
| Power per m of one air conduct (kW/m) inlet/outlet | 3.23/3.61 | 1.61/2.25 | 3.52/4.50 | 2.41/2.87 |
| [1] from Nu=0.023*Re^0.8*Pr^0.4; [2]from D$_{O2,z}$ = 0,00000000113*(T+273)^1.724/P m$^2$/s | | | | |

**Claims**

1. Reactor for heating a gas by reaction with solids, said reactor comprising gas conducts crossing through a region packed with the solids, said gas conducts having walls that are permeable but not selective to gases, **characterized in that**:

    i. the walls of said gas conducts present orifices with a length between 1 and 3 mm, while the void fraction of the walls range from 0.1 to 0.5;
    ii. the ratio between the length of said gas conducts and their effective diameter ranges from 200 to 1000;
    iii. the temperature of the region packed with the solids is between 500-1500ºC.

2. Reactor for heating a gas according to claim 1, wherein the gas is air, and the reactive component of the gas is oxygen.

3. Reactor for heating a gas according to anyone of claims 1 or 2, wherein the packed solids form a bed which comprises a reactive component selected from a carbonaceous fuel, a transition metal, a partially oxidized transition metal or calcium sulfide.

4. Reactor for heating a gas according to claim 3, wherein the transition metal is selected from Fe, Ni, Cu, Mn or Co.

5. Reactor for heating a gas according to anyone of claims 3 or 4, wherein the packed solids comprise an additional solid material with a high thermal conductivity.

6. Reactor for heating a gas according to claim 5, wherein the additional solid material is selected from metal alloys and silicon carbide.

7. Reactor for heating a gas according to anyone of claims 1 or 6, wherein the wall of the gas conducts is a perforated high temperature metal alloy.

8. Reactor for heating a gas according to anyone of claims 1 to 7 wherein the wall of the gas conducts contains fins penetrating the region packed with the solids.

9. Reactor for heating a gas according to anyone of claims 1 to 8, wherein the ratio formed by the product of the length of said gas conducts and the void fraction of the conduct walls, divided by the product of the effective diameter of said gas conducts and the length of the orifices in the conduct walls, is comprised between 50000 and 300000 m$^{-1}$.

10. Reactor for heating a gas according to claim 9, wherein the ratio is comprised between 100000 and 200000 m$^{-1}$.

11. Use of the reactor for heating a gas as defined in claims 1 to 10, wherein the reactor is the gas heater part of a Brayton cycle for power generation, with the air inlet at a pressure comprised between 10 and 30 bar and temperatures comprised between 500ºC and 700ºC, and gas exit temperatures comprised between 900ºC and 1500ºC and a pressure drop below 10% of the inlet.

12. Use of the reactor according to claim 11 which further comprises the following cyclic steps:

    - charging of a batch of reacting solids
    - preheating of the reacting solids

- cooling of the reaction products and
- discharge of the solid reaction products.

wherein the heating of the gas by reaction with solids takes place after the preheating step and before the cooling step.

13. Use of the reactor according to claim 12 **characterised in that** it comprises an additional regeneration step of the solids within the reactor by using a reducing fuel gas selected from hydrogen or natural gas.

14. Use of the reactor according to claim 13 wherein the reactor is the air reactor of a chemical looping combustion process for power generation **characterised in that** it comprises a series of cyclic steps where the oxidation of the reacting solids by air is followed by a regeneration of the reacting solids by their reaction with a fuel gas to produce a concentrated stream of $CO_2$.

FIG. 1

FIG. 2

FIG. 3

Europäisches
Patentamt

European
Patent Office

Office européen
des brevets

## EUROPEAN SEARCH REPORT

Application Number

EP 18 38 2362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 219 384 A1 (CASALE SA [CH]) 20 September 2017 (2017-09-20) * paragraphs [0020], [0024], [0049] - [0052]; claims; figure 9 * | 1-10 | INV. B01J8/02 |
| A | US 2014/134553 A1 (GHONIEM AHMED F [US] ET AL) 15 May 2014 (2014-05-15) * paragraphs [0008], [0012], [0018], [0022], [0028]; figure 5 * | 11-14 | |
| A | US 2014/134067 A1 (HARTVIGSEN JOSEPH J [US]) 15 May 2014 (2014-05-15) * paragraphs [0030], [0036] * | 1-10 | |
| A | WO 2015/081122 A2 (SILURIA TECHNOLOGIES INC [US]) 4 June 2015 (2015-06-04) * paragraphs [0151], [0152], [0245]; claims; figures * | 1-10 | |
| A | FR 2 846 710 A1 (INST FRANCAIS DU PETROLE [FR]) 7 May 2004 (2004-05-07) * page 1, paragraph 1-4; figures * | 1-14 | TECHNICAL FIELDS SEARCHED (IPC) F23B F23L B01J |

The present search report has been drawn up for all claims

| Place of search | Date of completion of the search | Examiner |
|---|---|---|
| Munich | 26 October 2018 | Serra, Renato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 38 2362

This annex lists the patent family members relating to the patent documents cited in  the above-mentioned European search report.
The members are as contained in the European Patent Office EDP file on
The European Patent Office is in no way liable for these particulars which are merely given for the purpose of information.

26-10-2018

| Patent document cited in search report | | Publication date | Patent family member(s) | | Publication date |
|---|---|---|---|---|---|
| EP 3219384 | A1 | 20-09-2017 | AU CA EP WO | 2017234973 A1<br>3017633 A1<br>3219384 A1<br>2017157717 A1 | 30-08-2018<br>21-09-2017<br>20-09-2017<br>21-09-2017 |
| US 2014134553 | A1 | 15-05-2014 | NONE | | |
| US 2014134067 | A1 | 15-05-2014 | AU BR CA EP US WO | 2013341370 A1<br>112015010642 A2<br>2889148 A1<br>2917673 A1<br>2014134067 A1<br>2014075075 A1 | 07-05-2015<br>11-07-2017<br>15-05-2014<br>16-09-2015<br>15-05-2014<br>15-05-2014 |
| WO 2015081122 | A2 | 04-06-2015 | EP US WO | 3074119 A2<br>2015152025 A1<br>2015081122 A2 | 05-10-2016<br>04-06-2015<br>04-06-2015 |
| FR 2846710 | A1 | 07-05-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5447024 A
- US 8110012 B2
- US 20120230897 A1

- GB 1467277 A
- WO 2004013538 A


**Non-patent literature cited in the description**

- **K.A. AL-ATTAB ; Z.A.ZAINAL.** Externally fired gas turbine technology: A review. *Applied Energy,* 2015, vol. 138, 474-487
- **ADANEZ et al.** Progress in Chemical-Looping Combustion and Reforming technologies. *Progress in Energy and Combustion,* 2012, vol. 38, 215-282
- **S. NOORMAN et al.** Packed Bed Reactor Technology for Chemical-Looping Combustion. *Ind. Eng. Chem. Res.,* 2007, vol. 46, 4212-4220

- **L. ANDRE et al.** Screening of thermochemical systems based on solid-gas reversible reactions for high temperature solar thermal energy storage. *Renewable and Sustainable Energy Reviews,* 2016, vol. 64, 703-715
- Perry's Chemical Engineering Handbook